Europäisches Patentamt

European Patent Office

Office européen des brevets

(19)

(11) Numéro de publication: **0 161 948**
**A1**

# (12) DEMANDE DE BREVET EUROPEEN

(21) Numéro de dépôt: **85400400.9**

(22) Date de dépôt: **01.03.85**

(51) Int. Cl.⁴: **H 04 N 5/217**

(30) Priorité: **06.03.84 FR 8403424**

(43) Date de publication de la demande: **21.11.85**
**Bulletin 85/47**

(84) Etats contractants désignés: **BE DE GB NL**

(71) Demandeur: **THOMSON-CSF, 173, Boulevard Haussmann, F-75379 Paris Cedex 08 (FR)**

(72) Inventeur: **Lacoste, Jean-Pierre, THOMSON-CSF SCPI 173, bld Haussmann, F-75379 Paris Cedex 08 (FR)**
Inventeur: **Mourier, Christian, THOMSON-CSF SCPI 173, bld Haussmann, F-75379 Paris Cedex 08 (FR)**

(74) Mandataire: **Courtellemont, Alain et al, THOMSON-CSF SCPI 173, Bld Haussmann, F-75379 Paris Cedex 08 (FR)**

(54) **Dispositif de correction de tache au noir, et caméra de télévision équipée d'un tel dispositif.**

(57) Dispositif de correction du niveau de tache au noir dans le signal vidéo de sortie d'un tube de caméra de télévision.

Le dispositif comporte une compensation classique de niveau de la tache au noir, obtenue en soustrayant du signal vidéo (Ev) une fraction du signal vidéo intégré par un circuit d'intégration (2); il subsiste alors une modulation du niveau de la tache au noir. Comme l'amplitude de la modulation de la tache au noir est sensiblement linéairement proportionnelle à l'amplitude de la valeur moyenne du signal vidéo, la correction de cette modulation se fait d'un signal préréglé fourni par un circuit de correction (5) et multiplié par le signal vidéo intégré (6).

Application aux caméras de télévision.

1

Dispositif de correction de tache au noir
et caméra de télévision équipée d'un tel dispositif.

La présente invention se rapporte à la correction de tache au noir dans les caméras de prise de vues de télévision.

Dans les caméras de télévision il est connu de corriger l'effet de diffusion qui s'établit au long du trajet optique formé par l'objectif, le diaphragme, le tube d'analyse et, dans le cas de la télévision en couleur, le séparateur trichrome. La correction consiste à soustraire du signal vidéo délivré par le tube, un signal proportionnel à la valeur moyenne, sur la durée d'une image, de ce signal vidéo. L'inconvénient d'une telle correction est qu'elle ne peut être parfaite que si le niveau de tache au noir est uniforme sur toute l'image ; or il s'avère que l'effet de diffusion, donc de tache au noir, n'est pas uniforme, est plus marqué au centre de l'image et n'est généralement symétrique ni par rapport à la verticale ni par rapport à l'horizontale passant par le centre de l'image. Il en résulte que seule une partie de l'image est parfaitement corrigée et que des défauts, sensibles à l'oeil, peuvent apparaître ; c'est le cas lorsque l'image se rapporte à un danseur qui évolue sur un fond clair dont il n'occupe qu'une faible surface ; la modification de couleur des vêtements du danseur, surtout lorsque ces vêtements sont sombres, est notable entre le centre et le bord de l'image.

La présente invention a pour but de permettre d'éviter ou, pour le moins, de réduire ce défaut.

Ceci est obtenu en associant à la correction connue, qui peut être considérée comme une correction statique, une correction dynamique qui tient compte de la modulation du niveau du noir en fonction de la position considérée dans l'image.

Selon l'invention un dispositif de correction de tache au noir comportant une borne pour recevoir le signal vidéo à corriger, une liaison pour transmettre le signal vidéo de la borne à la sortie du dispositif, un circuit intégrateur ayant une entrée couplée à la borne et des moyens de soustraction ayant une première entrée et une sortie dans la liaison et une deuxième entrée couplée au circuit intégrateur, est caractérisé en ce qu'il comporte également : un circuit de correction préréglé pour fournir des signaux de correction afin de corriger les modulations horizontale et verticale de tache au noir, et un circuit multiplicateur ayant une première entrée couplée à la sortie du circuit de correction et une seconde entrée couplée à la sortie du circuit intégrateur et une sortie couplée à une troisième entrée des moyens de soustraction.

L'invention sera mieux comprise et d'autres caractéristiques apparaîtront à l'aide de la description ci-après et des figures s'y rapportant qui représentent :

     - la figure 1, un dispositif de correction selon l'art connu,

     - la figure 2, un dispositif de correction selon l'invention,

     - la figure 3, un schéma détaillé d'un élément de la figure 2,

     - la figure 4, une mire utilisée pour le préréglage des dispositifs selon les figures 1 et 2,

     - la figure 5, un schéma représentant différents signaux obtenus dans les dispositifs des figures 1, 2 et 3.

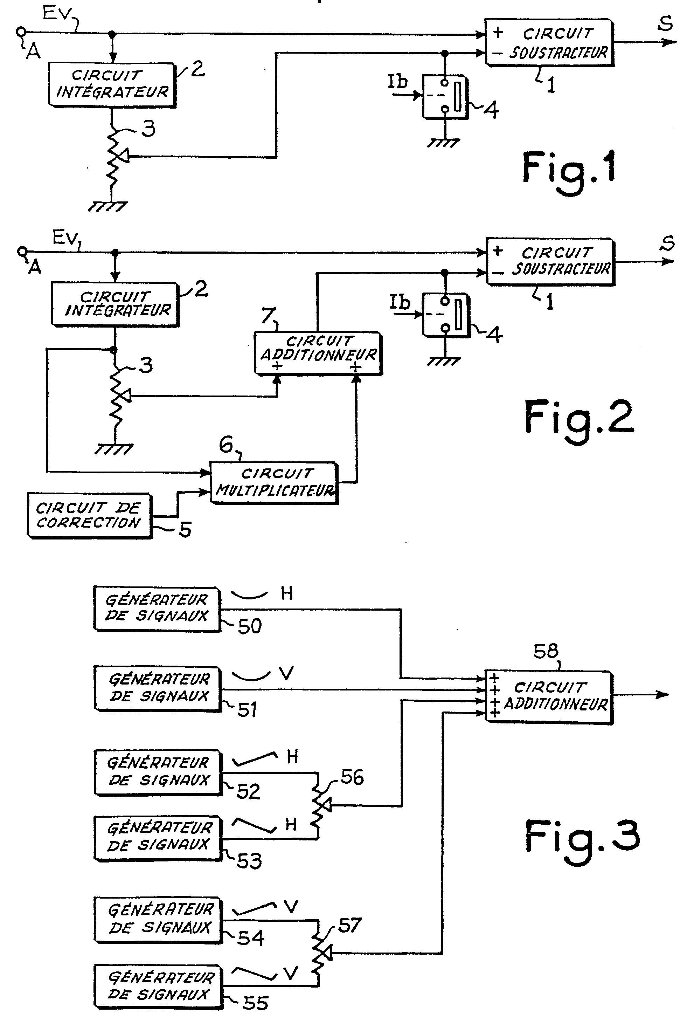

Sur les figures 1 et 2 les éléments correspondants sont désignés par les mêmes repères.

La figure 1 montre une borne A qui reçoit le signal vidéo, Ev, provenant d'un tube de caméra de télévision. Ce signal est appliqué à l'entrée + d'un circuit soustracteur 1 et à l'entrée d'un circuit intégrateur 2 dont la sortie est reliée à la première extrémité d'un potentiomètre 3 ; ce potentiomètre a sa seconde extrémité reliée à la masse et son curseur mobile relié à l'entrée - du circuit soustracteur 1. Un relais 4, commandé par les impulsions de blocage ligne et trame, Ib, est connecté entre l'entrée - du circuit soustracteur 1 et la masse de manière que, pendant les intervalles de suppression ligne et trame, aucun signal ne soit appliqué sur l'entrée - du circuit soustracteur.

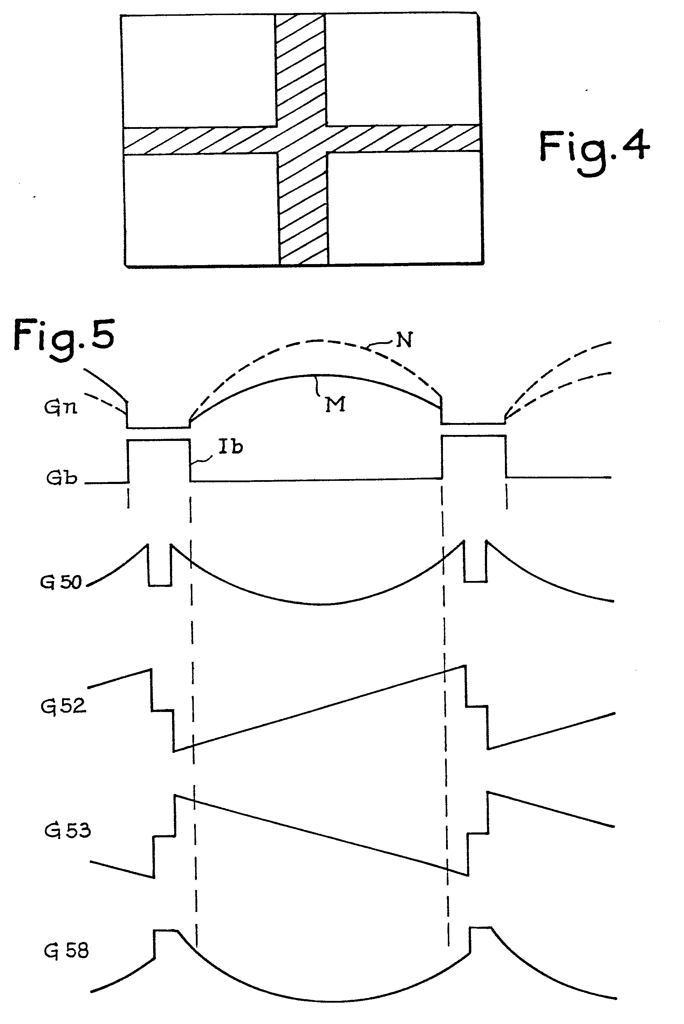

Le montage selon la figure 1 est généralement réglé à l'aide d'une mire d'un noir uniforme et de mires blanches rayées de noir ; le potentiomètre 3 est réglé pour que la contre-réaction qu'il introduit et qui est fonction de la valeur moyenne du signal vidéo, conserve au niveau de tache au noir une valeur aussi stable que possible. Le graphique Gn de la figure 5 montre deux courbes M et N, présentant une partie commune, et dont l'une est en traits pleins et l'autre en traits interrompus. La première courbe, M, représente le niveau de tache au noir minimum du signal Ev dans le cas où la mire est la mire noire ; le niveau du signal de sortie du circuit intégrateur 2 est alors très faible et il n'y a pratiquement pas d'effet de contre-réaction sur l'entrée - du circuit soustracteur 2, si bien que le niveau de tache au noir à la sortie, S, du circuit soustracteur n'est pratiquement pas modifié. La courbe N représente le niveau de tache au noir du signal Ev lorsque la mire est une mire blanche barrée, dans le sens horizontal et dans le sens vertical, d'une bande noire comme la mire représentée sur la figure 4 ; les mesures montrent que l'amplitude du niveau de la tache au noir est sensiblement linéairement proportionnelle à l'amplitude du signal de sortie du circuit intégrateur, et ceci avec une bonne approximation jusqu'à 90% de blanc dans la mire. Par la tension ramenée sur l'entrée - du circuit soustracteur 1 il est possible de faire que le signal sur la sortie, S, du circuit soustracteur ait sensiblement le même niveau de tache au noir qu'avec la mire noire ; le réglage consiste pour cela à descendre la courbe N jusqu'à ce qu'elle ait la même valeur moyenne que la courbe M.

Il est à noter que le graphique Gn de la figure 5 correspond à des formes de courbes de variation du niveau de la tache au noir telles qu'elles se produisent aussi bien suivant une horizontale qu'une verticale de l'écran du tube : forme bombée de voûte plus ou moins dissymétrique. Les figures 2 et 3 vont montrer comment il est possible de corriger le signal vidéo Ev pour obtenir que le niveau de la tache au noir soit sensiblement constant, non seulement d'une image à l'autre, comme c'est le cas avec le dispositif selon la figure 1, mais également pour tous les points du tube ; ceci revient à dire que le dispositif de correction qui va être décrit fournira un signal de sortie dont le niveau de la tache au noir sera le même pour tous les points de l'écran du tube.

Le dispositif de correction selon la figure 2 correspond au dispositif de correction selon la figure 1 aux différences près suivantes : d'une part le curseur du potentiomètre 3 n'est plus relié directement à l'entrée - du circuit soustracteur 1 mais à la première entrée d'un circuit additionneur 7 dont la sortie est reliée à l'entrée - du circuit soustracteur 1, d'autre part un circuit multiplicateur 6, dont la sortie est reliée à la seconde entrée du circuit additionneur 7, reçoit une partie du signal de sortie du circuit intégrateur 2 et le signal de sortie d'un circuit de correction 5.

Le circuit de correction 5 est constitué, comme le montre la figure 3, de six générateurs de signaux 50-55, de deux potentiomètres 56, 57 ayant leurs deux extrémités branchées respectivement sur les sorties des générateurs 52, 53 pour le potentiomètre 56 et sur les sorties des générateurs 54, 55 pour le potentiomètre 57 et d'un circuit additionneur, 58, à quatre entrées respectivement reliées aux sorties des générateurs de signaux 50, 51 et aux curseurs des potentiomètres 56, 57.

Les générateurs 50 à 55 sont des générateurs classiques employés dans les montages pour la correction des taches statiques apportées par les lumières de polarisation des tubes de caméras de télévision.

Le générateur de signaux 50 fournit, à fréquence ligne (H) et avec une amplitude réglagle, des signaux présentant une variation "amplitude par rapport au temps" en forme de cuvette ; ces signaux représentés sur le graphique G50 de la figure 5 ont une valeur moyenne nulle et une durée de la cuvette un peu supérieure à la durée d'une ligne du signal vidéo, c'est-à-dire à l'intervalle de temps qui sépare (voir graphique Gb de la figure 3) deux impulsions successives, Ib, de suppression ligne. Le générateur de signaux 51 réalise la même fonction que le générateur 50 mais à fréquence trame (V).

Les générateurs de signaux 52 et 53 sont respectivement des générateurs, à fréquence ligne (H), de signaux en dents de scie montantes et en dents de scie descendantes de même amplitude et même valeur absolue de pente et de valeur moyenne nulle ; ces signaux ont une durée de la dent de scie un peu supérieure à l'intervalle de temps qui sépare deux impulsions successives de suppression ligne. Les générateurs de signaux 54, 55 réalisent les mêmes fonctions que les générateurs 52, 53 mais à fréquence trame.

Selon le réglage des générateurs 50 et 51, le circuit additionneur 58 reçoit des signaux en cuvette de plus ou moins grande amplitude ; selon la position du curseur des potentiomètres 56 et 57, le circuit additionneur 58 reçoit des signaux en dent de scie plus ou moins montante ou plus ou moins descendante ou même un signal continu lorsque le curseur est en milieu de sa course.

Il a été vu plus avant que le niveau de la tache au noir (graphique Gn) avait une forme qui, entre deux impulsions de blocage ligne ou trame, est sensiblement proportionnelle à l'amplitude du signal d'intégration fourni par le circuit intégrateur 2. Il suffit donc de régler le générateur 50 et le potentiomètre 56, pour une valeur donnée du signal d'intégration, de telle sorte que la somme des deux signaux qu'ils délivrent, vienne, après multiplication par le signal d'intégration, compenser la modulation d'amplitude du niveau de la tache au noir dans le sens horizontal ; le réglage se fait en utilisant par exemple une mire du type de celle de la figure 4 ou une mire à plusieurs bandes noires verticales et horizontales sur un fond blanc. Après réglage la compensation restera valable quand la valeur du signal d'intégration variera puisque la multiplication, dans le circuit multiplicateur 6, fait évoluer le signal de correction de la même façon que la correction à effectuer.

Il en est de même pour la correction, à l'aide du générateur 51 et du potentiomètre 57, de la modulation d'amplitude du niveau de la tache au noir dans le sens vertical.

Le circuit de correction 5 permet donc de fournir un signal qui, après multiplication par le signal d'intégration du circuit 2, corrige la modulation de niveau de la tache au noir sur toute l'image.

La présente invention n'est pas limitée à l'exemple décrit. C'est ainsi, en particulier, que la soustraction du signal de sortie du circuit multiplicateur 6 au signal vidéo peut se faire en laissant la liaison directe entre le curseur du potentiomètre 3 et l'entrée - du circuit soustracteur 1 ; il faut pour cela, soit placer un second circuit soustracteur à l'entrée + du circuit soustracteur 1 et lui appliquer le signal vidéo Ev sur son entrée + et le signal de sortie du circuit multiplicateur sur son entrée -, soit placer le second circuit soustracteur avec son entrée + reliée à la sortie du circuit soustracteur 1 et son entrée - reliée à la sortie du circuit multiplicateur 6 et, dans ce cas le relais 4 devra être branché entre l'entrée - du second circuit soustracteur et la masse.

De même il est possible d'envisager une commande automatique ou manuelle du circuit de correction 5 pour modifier le réglage de ce

circuit en fonction des paramètres constitués par ceux des éléments de la caméra qui influent sur le niveau de la tache au noir : focale et diaphragme.

Il est également possible de réaliser une correction numérique en divisant l'image donnée par le tube en groupes de points et en mettant en mémoire, pour chaque groupe de points, la valeur de correction ou les différentes valeurs de correction correspondant aux paramètres à considérer ; le schéma de la figure 2 reste valable avec pour circuit de correction une mémoire adressée en fonction des signaux de ligne et de trame de l'image de télévision et en fonction des paramètres à considérer.

## REVENDICATIONS

1. Dispositif de correction de tache au noir comportant une borne (A) pour recevoir le signal vidéo à corriger, une liaison pour transmettre le signal vidéo de la borne (A) à la sortie (S) du dispositif, un circuit intégrateur (2) ayant une entrée couplée à la borne et des moyens de soustracteur (1, 3,7) ayant une première entrée et une sortie dans la liaison et une deuxième entrée couplée au circuit intégrateur, caractérisé en ce qu'il comporte également : un circuit de correction (5) préréglé pour fournir des signaux de correction afin de corriger les modulations horizontale et verticale de tache au noir, et un circuit multiplicateur (6) ayant une première entrée couplée à la sortie du circuit de correction et une seconde entrée couplée à la sortie du circuit intégrateur et une sortie couplée à une troisième entrée des moyens de soustraction.

2. Dispositif de correction selon la revendication 1, caractérisé en ce que les moyens de soustraction comportent : un circuit soustracteur (1) dont la sortie constitue la sortie des moyens de soustraction ; un circuit additionneur (7) ayant deux entrées respectivement couplées à la sortie du circuit intégrateur (2) et à la sortie du circuit multiplicateur (6).

3. Dispositif de correction selon l'une quelconque des revendications précédentes, caractérisé en ce que le circuit de correction comporte des générateurs de signaux (50-55) à fréquence ligne et trame et des moyens d'addition (56-58) des signaux de sortie des générateurs de signaux.

4. Caméra de télévision, caractérisée en ce qu'elle comporte au moins un dispositif de correction selon l'une des revendications précédentes.

EV

A

CIRCUIT
INTÉGRATEUR  2

3

Ib  4

+ CIRCUIT
− SOUSTRACTEUR  1

S

**Fig.1**

EV

A

CIRCUIT
INTÉGRATEUR  2

3

7
CIRCUIT
ADDITIONNEUR
+  +

Ib  4

+ CIRCUIT
− SOUSTRACTEUR  1

S

**Fig.2**

6
CIRCUIT
MULTIPLICATEUR

CIRCUIT DE
CORRECTION  5

GÉNÉRATEUR
DE SIGNAUX  H
50

GÉNÉRATEUR
DE SIGNAUX  V
51

GÉNÉRATEUR
DE SIGNAUX  H
52

56

GÉNÉRATEUR
DE SIGNAUX  H
53

GÉNÉRATEUR
DE SIGNAUX  V
54

57

GÉNÉRATEUR
DE SIGNAUX  V
55

58
+ CIRCUIT
+ ADDITIONNEUR
+
+

**Fig.3**

Fig.4

Fig.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 745 102 (ROBERT BOSCH) * Page 4, lignes 11-28 * | 1-4 | H 04 N 5/217 |
| A | TECHNICAL NOTES, no. 995, 5 février 1975, pages 1-3, RCA, Princeton, N.J., US; H. LOGEMAN Jr.: "Automatic pedestal compensation for TV data processing applications" | 1-4 | |
| A | GB-A-2 054 318 (PHILIPS) | | |

DOMAINES TECHNIQUES
RECHERCHES (Int. Cl.4)

H 04 N

Le présent rapport de recherche a été établi pour toutes les revendications

| Lieu de la recherche | Date d'achèvement de la recherche | Examinateur |
|---|---|---|
| LA HAYE | 12-07-1985 | CRISTOL Y. |